(19) Europäisches Patentamt
European Patent Office
Office européen des brevets

(11) **EP 1 808 783 A1**

(12) **EUROPEAN PATENT APPLICATION**

(43) Date of publication:
**18.07.2007 Bulletin 2007/29**

(51) Int Cl.:
***G06F 17/30*** *(2006.01)*

(21) Application number: **06119943.6**

(22) Date of filing: **31.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.01.2006 KR 20060004595**

(71) Applicant: **SAMSUNG ELECTRONICS CO., LTD. Suwon-City, Kyungki-do (KR)**

(72) Inventors:
 • **LEE, Sung-jin**
  **Yongin-si, Gyeonggi-do (KR)**
 • **WOO, Woon-tack**
  **Gwangju (KR)**
 • **HAN, Dae-ho**
  **Seoul (KR)**
 • **JUNG, Woo-jin**
  **Jeonju-si, Jeollabuk-do (KR)**

(74) Representative: **Perkins, Dawn Elizabeth et al Venner Shipley LLP
20 Little Britain
London EC1A 7DH (GB)**

(54) **Method of providing multimedia and information services taking into account user context information and the service providing apparatus thereof**

(57) A method of providing multimedia and information services taking into account user context information, and an apparatus providing these multimedia and information services are provided. The method involves calculating the direction wherein the user is facing using the user context information; comparing the direction wherein the user is determined to be facing with the environment information source of the area wherein the user is located; determining whether the attention of the user is focused on a service device in the location of the user; and providing a service using the device that the attention of the user is focused on if it is determined that the attention of the user is focused on a service device.

FIG. 6

EP 1 808 783 A1

**Description**

Apparatuses and methods consistent with the present invention relate to providing multimedia and information services, and more specifically, to providing multimedia and information services customized to the user,, taking into account not only the location but also user context information to provide the services.

As a result of "ubiquitous computing", it has become common for a single user to own several computers and other communication devices, and the environment provided by the various services using these communication devices is rapidly changing.

In the field of wireless communication, users can move around freely while receiving multimedia and information services using a diverse range of communication devices based on movement. Users who have adapted to the changes in the environment of "ubiquitous" multimedia and information services are increasingly demanding new and more convenient services.

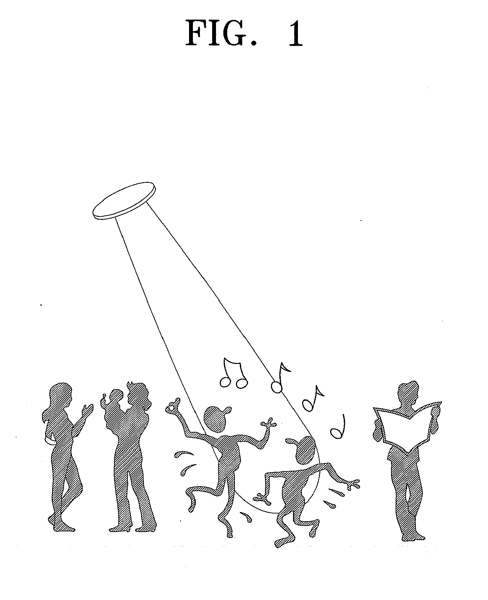

Figure 1 is a drawing illustrating the related art method of providing multimedia and information services. The related art method of providing a music service to a user located in a specific domain utilizes a system involving the "steering of directional sound beams", as shown in Figure 1.

The user located in a specific location is provided with music from speakers located nearby, and determining the location of the user can enable the music service to provide the sound in a manner so as to follow the user's movements.

Sound waves audible to the human ear have the property of traveling in all directions, so in order to transmit the sound only in the direction the user desires, it is necessary to use a technique to gather the sound in one place so it does not scatter.

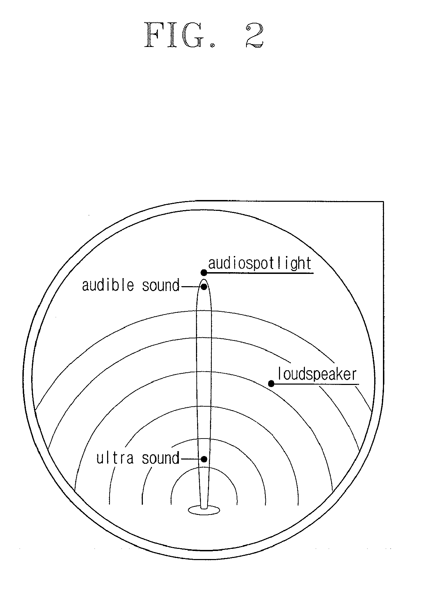

Figure 2 is a diagram showing conceptually how the music service illustrated in Figure 1 is provided. In order that the sound does not spread and music is provided only to the user's specific location, the wavelength is small, so ultrasound is used, as it travels in a direct path through the air. As a result, sound can be concentrated in the desired location through speakers located close to the user's specific location, and because sound is transmitted only in the user's specific location it cannot be heard by other people nearby.

However, this kind of related art method is restricted to providing only sound. Additionally, because it takes into consideration only the location of the user, it provides a service to the user without regard for the user's preferences.

Accordingly, a method is required to provide a service by which not only music but diverse forms of multimedia and information can be improved, managed, and even shared between two or more users. Additionally, a method of understanding user context information is also necessary, giving information about not only the location of the user, but also concerning the user's preferences.

The present invention provides multimedia and information services, taking into consideration user context information, and an apparatus for providing this service, so that the user may be able to improve, manage, and even share with other users customized multimedia and information services.

According to an aspect of the present invention, there is provided a multimedia and information providing service considering user's context information which comprises calculating information about a direction in which a user is facing based on context information received from the user; comparing the information about the user's direction to information about the environment in an area in which the user is located; determining whether the attention of the user is focused in a specific direction based on the results of comparing; and providing the services of service devices located in that direction to the user if the attention of the user is determined to be focused in a particular direction.

The user context information may comprise at least one of user identification information, time information, and location information, and the direction in which the user is facing is determined using the location information.

The environment information source is information on the direction wherein service devices in the area surrounding the user are located, and in the comparing the direction in which the user is facing is compared with the direction in which the service devices are located.

The determining determines that one or more service devices in a direction consistent with the direction of the user's gaze have the user's attention.

If a service device is determined to have the user's attention, the determined can further comprise filtering information necessary for providing the service using the service device.

The filtering filters the service device information that has the user's attention, and filters the user information relevant to the filtered service device information.

Providing the service simultaneously activates other service devices located in an arc in front of the user as the user moves.

Also, if the service providing determines that the attention of another user is focused on the service device while the service is in use, the service may be provided collectively.

The service providing apparatus of the present invention determines the user's direction included in the transmitted user context information, determines whether the user's attention is focused on a certain service by comparing the determines user direction with the environmental information source of the user's location domain, and provides the service whereon the user's attention is focused if it is determined that the user's attention is focused on a particular service.

The user context information may comprise at least one of user identification information, time information, and location information, and the direction the user is facing may be determined using the location information.

Additionally, the environment information may be information about the direction in which the service device is located in the domain applicable to the location information of the user, and the service providing apparatus may compare the direction in which the user is facing with the direction in which the service device is located.

The service providing apparatus determines whether the user's attention is focused on one or more service devices in a direction consistent with the direction in which the user is facing.

If it is determined that the user's attention is focused on a particular service, the information necessary for providing the service can be filtered.

The service providing apparatus filters information on the service device in which the user's attention is focused, and filters user information applicable to the filtered service device information.

The service providing apparatus is activated simultaneously with other service devices located in the area in front of the user when the user moves.

If the service providing apparatus, while providing a service to one user, is determined to have the attention of a different user, the service may be provided collectively.

According to another aspect of the present invention, there is provided a service providing system which comprises a transmission sensor that transmits identification signals in order to determine the user's location; a reception sensor that receives transmitted identification signals; a portable terminal transmitting the user context information, including the user location information from the received identification signal, and a server providing the service desired using the user context information received from the portable terminal.

Additionally, the transmission sensor comprises infrared (IR) transmission sensors, and the reception sensor comprises IR reception sensors.

The reception sensor and the portable terminal can be disposed separately.

For example, the IR reception sensors of the reception sensor can be fastened to the shoulder of the user.

In this situation, the sensing domain for determining the location of the user may be smaller than the shoulders of the user.

The user context information comprises at least one of user identification information, location information, and time information.

The server determines the direction in which the user is facing using the location information, and determines if the attention of the user is focused on one or more service devices located in the direction the user is facing.

The server also filters information necessary for the service device upon which the attention of the user is determined to be focused to provide the desired service, and provides the service related to the filtered information.

The above and other aspects of the present invention will become more apparent by describing in detail exemplary embodiments thereof with reference to the attached drawings in which:

Figure 1 is a drawing explaining a related art method for providing a multimedia or information service;

Figure 2 is a diagram explaining conceptually the method for providing a multimedia service shown in Figure 1;

Figure 3 is a drawing illustrating a system for providing a multimedia and information service using a service providing apparatus according to an exemplary embodiment of the present invention;

Figure 4 is a drawing explaining a method of determining the location of a user according to an exemplary embodiment of the present invention;

Figure 5 is a drawing explaining a method of determining the direction a user is facing according to an exemplary embodiment of the present invention; and

Figure 6 is a flow diagram of a method for providing a multimedia or information service using the service providing apparatus considering user context information according to an exemplary embodiment of the present invention.

The invention will be explained in greater detail below, referring to the attached drawings.

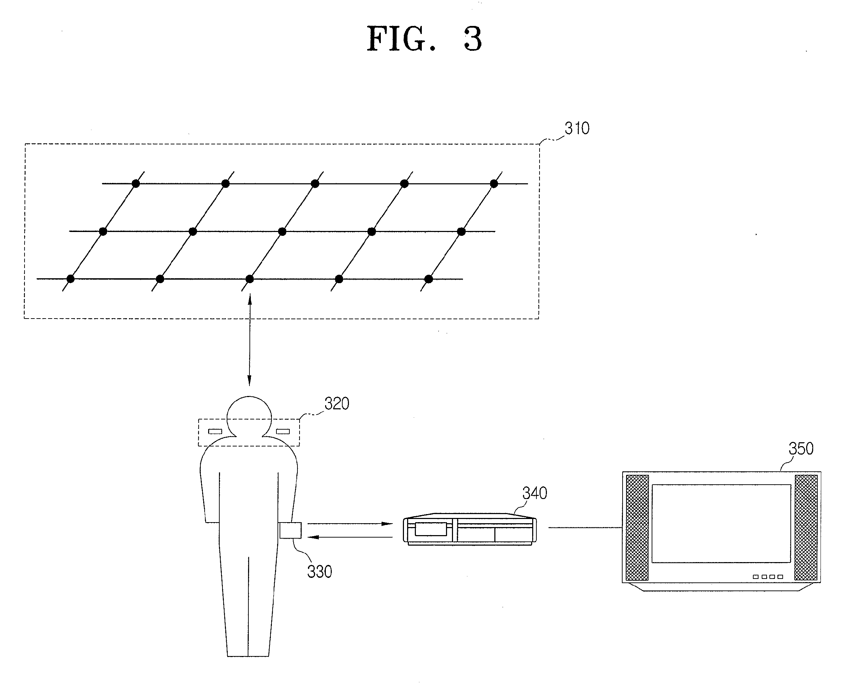

Figure 3 is a drawing showing a multimedia and information service providing system using a service providing apparatus according to an exemplary embodiment of the present invention.

This service providing apparatus provides a diverse range of multimedia and information services. At this time, the service providing apparatus providing diverse multimedia and information services provides a service individually tailored to the individual user, by considering not only a location of the user, but also user context information.

Referring to Figure 3, the multimedia and information service providing system comprises a transmission sensor 310, a reception sensor 320, a portable terminal 330, a server 340 and a digital television (DTV) 350.

The transmission sensor 310 comprises a plurality of infrared IR transmission sensors at intervals in a grid form on the ceiling of the space in order to track the position of the user, and each IR sensor transmits identification signals for a respective location.

The reception sensor 320 comprises IR reception sensors, and determines the location of the user using identification signals corresponding to each location received from the transmission sensors 310.

The portable terminal 330, which may be an apparatus that may be carried by the user, comprises, for example, a movement reporting terminal, a personal data assistant (PDA) and a portable media player (PMP). The portable terminal 330 receives information on the location of the user from the reception sensor 320.

Here, the portable terminal 330 is illustrated and explained as being separate from the reception sensor 320, but this is merely an example, and the reception sensor 320 can also be integrally formed iun the portable terminal 330.

The server 340 receives the user context information from the portable terminal 330, as an example of a service providing apparatus providing a service considering the received user context information. In this case, the server 340 can be constructed to use an appliance, such as a refrigerator that is always switched on, or a DTV 350, as described below, or can be constructed as an audio visual (AV) gateway.

Specifically, the server 340 determines a direction in which the user is facing using location information included in the context information received from the portable terminal 330. Additionally, the server 340 determines where the user's attention is focused using the determined direction information, and provides the desired service to the user. At this time, the portable terminal 330 of the user must be registered on the server 340.

As an example, in the situation where the user is facing in the direction of the DTV 350, the server 340 determines that the user's attention is focused on the DTV 350 and that the DTV 350 should be turned on. Here the DTV 350 is an example of a device providing a service to the user, which provides a multimedia service to the user under the control of the server 340.

Although not all examples are illustrated here, the server 340 can provide multimedia services, such as movies and music, information services such as stock market or weather reports, and practical services such as opening and shutting a gate, or switching lights on and off, switching gas valves and water pipes on or off, and other similar services.

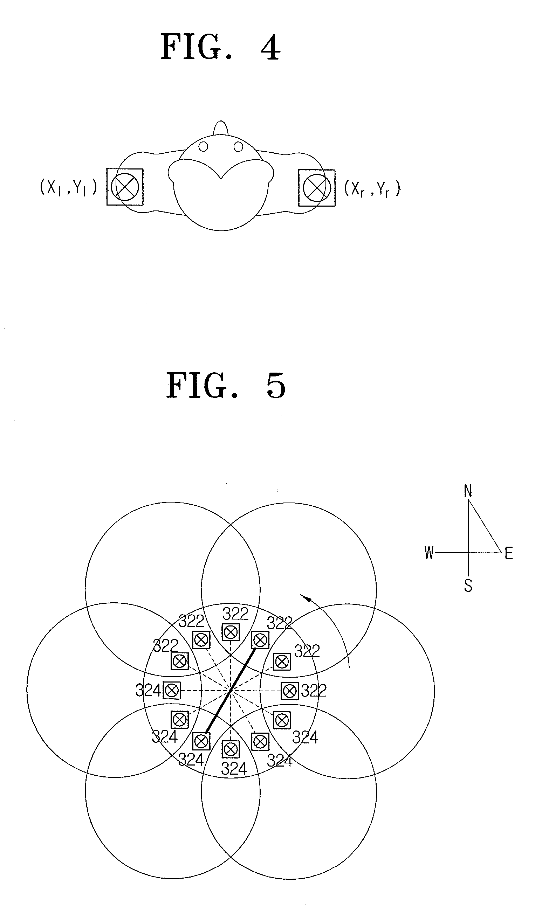

Figure 4 is a diagram showing a method of determining the location of the user according to an exemplary embodiment of this invention, and Figure 5 is a diagram showing a method of recognizing the direction in which the user is facing according to an exemplary embodiment of this invention.

Referring to Figure 4, reception sensors 322 and 324 are attached to the shoulders of the user in order to recognize the user's location. The coordinates of the reception sensor fastened to the left shoulder 322 are $(x_1, y_1)$, and the coordinates of the reception sensor fastened to the right shoulder 324 are $(x_r, y_r)$.

The reception sensors 322 and 324 receive identification signals from the transmission sensor and determine the location, for example, the coordinates, of the user. The portable terminal 330 receives the user location identification, for example, the two sets of coordinates, from the reception sensors 322 and 324. Also, the server 340 determines the direction of the user, for example, the direction in which the user is facing, based on the two sets of coordinates received from the portable terminal 330.

Referring to Figure 5, each circle indicates the sensing domain of the signal used to determine the direction in which the user is facing. In the situation that the user turns in the direction of the arrow, a maximum of twelve compass points can be distinguished.

The server 340 determines the precise direction the user is facing by using the aggregate of the domain signals, rather than calculating the spatial orientation based on a single signal. Also, since there is variation in the shoulder width of individual users, the server 340 assumes an average width of 40 cm to 50 cm, for example. By setting the area of the sensing domain of each sensor for calculating the direction the user is facing at less than or equal to 50 cm, the two sensors 322 and 324 can be prevented from entering the same sensing domain.

The server 340 determines the direction the user is facing based on the user's location using Formula 1 as follows.

[Formula 1]

$$\theta = \cos^{-1} \frac{|x_l - x_r|}{\sqrt{(x_l - x_r)^2 + (y_l - y_r)^2}}$$

The server 340 determines the direction the user is facing based on the user's location, i.e., using the coordinates $(x_l, y_l)$, $(x_r, y_r)$ of the reception sensors 322 and 324, using Formula 1. Specifically, if $x_l < x_r$ and $y_l = y_r$ the server 340 determines the direction the user is facing to be 0°, if $x_l < x_r$ and $y_l < y_r$, the server 340 determines the direction to be θ.

If $x_l = x_r$ and $y_l < y_r$, the server 340 determines the direction to be 90°, and if $x_l > x_r$ and $y_l < y_r$ the server 340 determines the direction to be θ+90°. Also, if $x_l > x_r$ and $y_l = y_r$, the server 340 determines the direction to be 180°, and if $x_l > x_r$ and $y_l > y_r$ the server 340 determines the direction to be θ+180°. Moreover, if $x_l = x_r$ and $y_l > y_r$, the server 340 determines the direction to be 270°, and if $x_l < x_r$ and $y_l > y_r$ the server 340 determines the direction to be θ+270°.

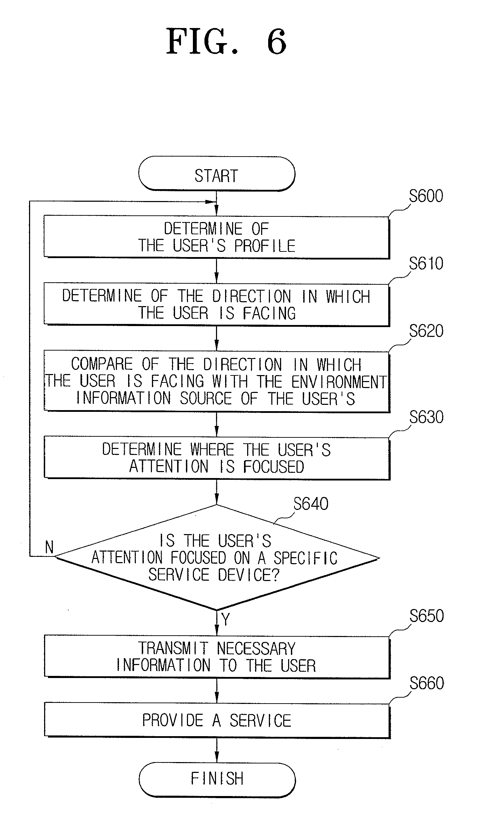

Figure 6 is a flow diagram of a service providing method of the multimedia and information service providing apparatus considering the user's context information according to an exemplary embodiment of the present invention.

Referring to Figure 6, in S600, the server 340 determines the user profile using the user context information received from the user's portable terminal 330. At this time, the user's portable terminal 330 is registered on the server 340, and information about the user of the registered portable terminal 330 is stored on the server 340. The server 340 is able to confirm the identity of the user using, for example, fingerprint recognition, iris recognition, or facial recognition through the portable terminal 330, and thereby determines the user's profile.

In S610, the server 340 determines the direction the user is facing using the location information included in the context information received from the portable terminal 330.

Additionally, in S620, the server 340 compares the information on the direction wherein the user is facing with the environment information source of the area wherein the user is located. The environment information source of the area wherein the user is located is the information on the direction of objects located in the area of the user, included in the user context information received from the portable terminal 330. The environment information source is information on what kind of service devices exist in the domain wherein the user is located, and the direction in which the service devices are located relative to the user. Specifically, the server 340 compares the direction wherein the service devices are located with the direction in which the user is facing.

In S630, the server 340 determines whether the attention of the user is focused in a certain direction by using the results of the comparison in S620. Specifically, the server 340 compares information on the direction wherein the service devices are located with information on the direction wherein the user is facing, and the server 340 determines that the user is focused on a specific service device if the information on the direction of the user is consistent with the information on the location of the specific service device. The server 340 determines that the attention of the user is focused on one specific service device and that the user intends to receive a service from that particular service device.

In S640, it is determined whether the attention of the user is in a particular direction. If it is determined that the attention of the user is in a particular direction, the server 340 filters information necessary for the user in S650. The server 340 filters information concerning the specific service device whereon the attention of the user is focused among the devices in the domain wherein the user is located. Also, the server 340 confirms whether there is information about the specific service device upon which the attention of the user is focused. As an example, in the situation that the device is a DTV 350, the server 340 transmits information concerning the DTV 350, and may, for example, confirm whether the user's channel or program preferences are stored. If the user's channel or program preferences are stored, the server 340 transmits the relevant information.

If the channel and program preferences of the user are not stored, the server 340 may require the user to select channel or program preferences through the portable terminal 330 or the DTV 350. In this situation, the server 340 filters information concerning the channel or program selected by the user. In S660, the server 340 provides the service related to the filtered information. At this time, the server 340 simultaneously activates other service devices located in the area in front of the user as the user turns. This is to prevent services being suspended if the user turns while using the service.

If it is determined that the attention of another user is focused on a service device currently in service, the service may be collectively provided to a plurality of users. For example, if it is determined that the attention of a user is focused on the DTV 350 while the DTV 350 is providing a service to another user, the server 340 can permit each user to select their desired channel and program preferences through their portable terminal or DTV 350. This prevents service conflicts from arising in the case that several users wish to receive services from the same device, and permits services to be shared.

As described above, not only are a diverse range of multimedia and information services able to be provided by this invention, but additionally services can be provided tailored to each individual user, increasing the convenience and practicality of this invention.

Although the present invention is explained and described above with reference to a specific exemplary embodiment, this invention is not restricted to the specific exemplary embodiment described above. It will be readily apparent to those skilled in the technical field of the present invention that various changes and modifications will fall within the scope of this invention as defined in the appended claims, and that such changes and modifications do not deviate from the technical concepts and vision of the present invention.

**Claims**

1. A method of providing multimedia or information services, the method comprising:

determining a direction in which a user is facing;
determining whether the user is facing towards a service providing device (350); and
providing a service via the service providing device (350) if it is determined that the user is facing towards the service providing device (350).

2. The method, according to claim 1, wherein the direction in which the user is facing is determined based on user context information comprising at least one of user identification information, user time information, and user location information.

3. The method according to claim 2, wherein the determining the direction in which the user is facing comprises determining the direction based on the user location information.

4. The method according to claim 3, wherein the user locating information comprises the location of a plurality of spaced apart reception sensors (322, 324) attached to the user.

5. The method according to claim 4, further comprising determining the location of two spaced apart reception sensors (322, 324) using a gridwork of transmission sensors (310) each having a sensing domain having a diameter less than a distance between the two reception sensors (322, 324).

6. The method according to any one of claims 2 to 5, comprising the step of comparing the direction the user is facing with environment information about an area in which the user is located and identifying at least one service providing device (350) based on the comparison.

7. The method, according to claim 6, wherein the environment information comprises information on a direction in which a plurality of service providing devices are located relative to a location indicated by the user location information; and the comparing comprises comparing the direction in which the user is facing with the direction in which the service providing devices are located.

8. The method, according to any one of the preceding claims, the method further comprising:

    filtering information necessary for providing the service.

9. The method, according to claim 8, wherein the information necessary for providing the service comprises information concerning user preferences.

10. The method, according to any one of the preceding claims, wherein in the providing the service, other service providing devices located in an area in front of the user are activated simultaneously as the user moves.

11. The method, according to any one of the preceding claims, wherein in the providing the service, the service is provided to a plurality of users if it is determined that the user is facing towards the service providing device (350), and the service providing device (350) is already in use by another user.

12. A multimedia or information service providing apparatus comprising:means for determining a direction a user is facing;

    means for determining whether the user is facing towards a service providing device (350); and
    means for providing a service via the service providing device (350) if it is determined that the user is facing towards the service providing device (350).

13. The multimedia or information service providing apparatus according to claim 12, wherein the direction in which the user is facing is determined based on user context information comprising at least one of user identification information, user time information, and user location information.

14. The multimedia or information service providing apparatus according to claim 13, wherein the direction in which the user is facing is determined using the user location information.

15. The multimedia or information service providing apparatus according to claim 13 or 14, comprising means for comparing the direction in which the user is facing with environment information about an area in which the user is located, and identifying at least one service providing device (350) based on the comparison.

**16.** The multimedia and information service providing apparatus according to claim 15, wherein the environment information comprises information on a direction in which service providing devices (350) are located relative to a location indicated by the user location information; and

the service providing apparatus further comprises means for comparing the direction in which the user is facing with the direction in which the service devices are located.

**17.** The multimedia or information service providing apparatus according to any one of claims 12 to 16, further comprising means for filtering information necessary for providing the service.

**18.** The multimedia or information service providing apparatus according to claim 17, wherein the information necessary for providing the service comprises information concerning user preferences.

**19.** The multimedia or information service providing apparatus according to any one of the preceding claims, wherein other service devices located in front of the first user as the first user moves are activated simultaneously.

**20.** The multimedia or information service providing apparatus according to any one of the preceding claims, wherein the service may be provided to a plurality of users if the service device (350) is already in use by another user.

**21.** A multimedia or information service providing system according to any one of claims 12 to 20, wherein the means for determining the direction the user is facing comprises:

a transmission sensor which transmits an identification signal corresponding to a location of the user;
a reception sensor (322, 324) which receives the transmitted identification signal transmitted by the transmission sensor and determines the location of the user based on the identification signal.

**22.** The multimedia or information service providing system according to claim 21, further comprising:

a portable terminal (320) which receives information on the location of the user from the reception sensor (322, 324) and transmits user context information, which comprises the information on the user's location according to the identification signal received.

**23.** The multimedia or information service providing system according to claim 21 or 22, comprising a pair of spaced apart reception sensors (322, 324) wherein the direction of the user is facing is determined based on the locations of the reception sensors (322, 324).

**24.** The multimedia or information service providing system according to any one of claims 21 to 23, wherein the transmission sensor comprises at least one infrared (IR) transmission sensor; and the reception sensor (322, 324) comprises at least one IR reception sensor.

**25.** The multimedia or information service providing system according to claim 22, wherein the reception sensor (322, 324) and the portable terminal (320) are disposed separately.

**26.** The multimedia or information service providing system according to any one of claims 21 to 25, wherein the at least one reception sensor (322, 324) is fastened to at least one shoulder of the user.

**27.** The multimedia or information service providing system according to claim 26, further comprising a sensing domain of the identification signal, wherein the sensing domain is used to determine the location of the user.

**28.** The multimedia or information service providing system according to claim 27, wherein the sensing domain is smaller than a distance between a pair of reception sensors (322, 324).

**29.** The multimedia or information service providing system according to any one of claims 21 to 28, wherein the transmission sensor comprises a plurality of infrared (IR) sensors disposed in a grid form (310) over an area in which the user is located.

**30.** The multimedia or information service providing system according to any one of claims 21 to 29, wherein the portable terminal (320) comprises one of a movement reporting terminal, a personal data assistant (PDA) and a portable media player (PMP).

**31.** A multimedia or information service providing system, comprising:

a transmission sensor which transmits an identification signal corresponding to a location of the user;
a reception sensor which receives the transmitted identification signal transmitted by the transmission sensor and determines the location of the user based on the identification signal;
a portable terminal which receives information on the location of the user from the reception sensor and transmits user context information, which comprises the information on the user's location according to the identification signal received; and a server which provides a service based on the user context information received from the portable terminal.

# FIG. 1

# FIG. 2

# FIG. 3

EP 1 808 783 A1

# FIG. 4

$(X_l, Y_l)$      $(X_r, Y_r)$

# FIG. 5

# FIG. 6

START

DETERMINE OF
THE USER'S PROFILE — S600

DETERMINE OF THE DIRECTION IN WHICH
THE USER IS FACING — S610

COMPARE OF THE DIRECTION IN WHICH
THE USER IS FACING WITH THE ENVIRONMENT
INFORMATION SOURCE OF THE USER'S — S620

DETERMINE WHERE THE USER'S
ATTENTION IS FOCUSED — S630

IS THE USER'S
ATTENTION FOCUSED ON A SPECIFIC
SERVICE DEVICE? — S640

N

Y

TRANSMIT NECESSARY
INFORMATION TO THE USER — S650

PROVIDE A SERVICE — S660

FINISH

**European Patent Office**

**EUROPEAN SEARCH REPORT**

Application Number

EP 06 11 9943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REKIMOTO J ET AL: "THE WORLD THROUGH THE COMPUTER: COMPUTER AUGMENTED INTERACTION WITHREAL WORLD ENVIRONMENTS" UIST '95. 8TH ANNUAL SYMPOSIUM ON USER INTERFACE SOFTWARE AND TECHNOLOGY. PROCEEDINGS OF THE ACM SYMPOSIUM ON USER INTERFACE SOFTWARE AND TECHNOLOGY. PITTSBURGH, PA, NOV. 14 - 17, 1995, ACM SYMPOSIUM ON USER INTERFACE SOFTWARE AND TECHNOLOGY, NEW YOR, 14 November 1995 (1995-11-14), pages 29-36, XP000634412 ISBN: 0-89791-709-X * page 30, right-hand column, paragraph 2 - page 32, left-hand column, paragraph 1 * * page 33, left-hand column, last paragraph * * page 35, left-hand column, paragraph 3 - page 36, left-hand column, paragraph 4 * * figures 2-5,9,11 * ----- | 1-31 | INV. G06F17/30 |
| X | ROGERS E ET AL: "Outbreak Agent: intelligent wearable technology for hazardous environments" SYSTEMS, MAN, AND CYBERNETICS, 1997. COMPUTATIONAL CYBERNETICS AND SIMULATION., 1997 IEEE INTERNATIONAL CONFERENCE ON ORLANDO, FL, USA 12-15 OCT. 1997, NEW YORK, NY, USA,IEEE, US, vol. 4, 12 October 1997 (1997-10-12), pages 3198-3203, XP010249088 ISBN: 0-7803-4053-1 * page 3199, left-hand column, last paragraph - page 3203, left-hand column, last paragraph * ----- -/-- | 1-31 | TECHNICAL FIELDS SEARCHED (IPC) G06F |

The present search report has been drawn up for all claims

| Place of search | Date of completion of the search | Examiner |
|---|---|---|
| Munich | 14 November 2006 | Konak, Eyüp |

**European Patent
Office**

**EUROPEAN SEARCH REPORT**

Application Number

EP 06 11 9943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/41178 A (BRITISH TELECOMM [GB]; CRABTREE IAN BARRY [GB]; LOFFLER ALEXANDER [GB]) 23 May 2002 (2002-05-23) <br> * abstract * <br> * page 7, line 15 - page 9, line 26 * <br> * page 11, line 16 - last line * <br> * page 22, line 21 - line 29 * <br> ----- | 1-31 | |
| X | WO 02/059778 A2 (SIEMENS AG [DE]; BEU ANDREAS [DE]; TRIEBFUERST GUNTHARD [DE]) 1 August 2002 (2002-08-01) <br> * page 4, line 27 - page 5, line 26 * <br> ----- | 1-31 | |
| X | WO 2005/104033 A (SIEMENS AG [DE]; ST JOHN BEN [DE]) 3 November 2005 (2005-11-03) <br> * abstract * <br> * page 1, line 6 - line 12 * <br> * page 2, line 1 - page 3, line 16 * <br> ----- | 1-31 | |

TECHNICAL FIELDS
SEARCHED (IPC)

The present search report has been drawn up for all claims

| Place of search | Date of completion of the search | Examiner |
|---|---|---|
| Munich | 14 November 2006 | Konak, Eyüp |

EPO FORM 1503 03.82 (P04C01)

European Patent
Office

Application Number

EP 06 11 9943

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**LACK OF UNITY OF INVENTION
SHEET B**

The Search Division considers that the present European patent application does not comply with the requirements of unity of invention and relates to several inventions or groups of inventions, namely:

```
1. claims: 1-30

        Method and apparatus for providing context sensitive
        services based on the direction that a user is facing
                              ---

2. claim: 31

        Apparatus for provding multimedia services based on the
        location of the user
                              ---
```

**ANNEX TO THE EUROPEAN SEARCH REPORT
ON EUROPEAN PATENT APPLICATION NO.**                    EP 06 11 9943

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2006

| Patent document cited in search report | | Publication date | Patent family member(s) | | Publication date |
|---|---|---|---|---|---|
| WO 0241178 | A | 23-05-2002 | AU | 1511202 A | 27-05-2002 |
| | | | AU | 1512002 A | 27-05-2002 |
| | | | AU | 2381102 A | 27-05-2002 |
| | | | CA | 2428396 A1 | 23-05-2002 |
| | | | CA | 2428404 A1 | 23-05-2002 |
| | | | CA | 2428545 A1 | 23-05-2002 |
| | | | CN | 1476567 A | 18-02-2004 |
| | | | CN | 1476568 A | 18-02-2004 |
| | | | CN | 1531693 A | 22-09-2004 |
| | | | DE | 60103085 D1 | 03-06-2004 |
| | | | DE | 60103085 T2 | 25-11-2004 |
| | | | DE | 60103301 D1 | 17-06-2004 |
| | | | DE | 60103301 T2 | 25-05-2005 |
| | | | DE | 60103775 D1 | 15-07-2004 |
| | | | DE | 60103775 T2 | 14-07-2005 |
| | | | WO | 0241176 A1 | 23-05-2002 |
| | | | WO | 0241177 A1 | 23-05-2002 |
| | | | JP | 2004514217 T | 13-05-2004 |
| | | | JP | 2004514218 T | 13-05-2004 |
| | | | JP | 2004514219 T | 13-05-2004 |
| | | | US | 2004039814 A1 | 26-02-2004 |
| | | | US | 2004049537 A1 | 11-03-2004 |
| WO 02059778 | A2 | 01-08-2002 | EP | 1370981 A2 | 17-12-2003 |
| | | | US | 2004209230 A1 | 21-10-2004 |
| WO 2005104033 | A | 03-11-2005 | NONE | | |